# EUROPÄISCHE PATENTSCHRIFT

(11) **EP 0 316 626 B1**
(45) Veröffentlichungstag und Bekanntmachung des Hinweises auf die Patenterteilung: **26.01.1994**
(21) Anmeldenummer: 88117802.4
(22) Anmeldetag: 26.10.1988
(51) Int. Cl.: H01M 8/04, C25B 15/00

(54) **Elektrochemische Zelle**
Electrochemical cell
Cellule électrochimique

(30) Priorität: 12.11.1987 DE 3738370
(43) Veröffentlichungstag der Anmeldung: 24.05.1989
(73) Patentinhaber: DAIMLER-BENZ AKTIENGESELLSCHAFT, 70567 Stuttgart (DE)
(72) Erfinder: Tillmetz, Werner, Dr. Dipl.-Chem., D-8992 Wasserburg a.B. (DE); Wolters, Hans-Joachim, Dr. Dipl.-Chem., D-7758 Meersburg (DE)

(56) Entgegenhaltungen:
- EP-A- 0 158 583
- EP-A- 0 301 757
- DE-A- 1 496 103
- FR-A- 1 343 617
- FR-A- 1 402 790
- FR-A- 1 547 850
- FR-A- 1 564 981
- FR-A- 1 577 685
- US-A- 3 172 784
- US-A- 3 453 147
- US-A- 3 761 316
- US-A- 3 905 884
- US-A- 3 957 535
- US-A- 4 769 297

## Beschreibung

Die Erfindung betrifft eine elektrochemische Zelle mit immobilem Elektrolyten, insbesondere zum Einsatz in Luftfahrt und Raumfahrt.

Bei elektrochemischen Zellen, die unter extremen Bedingungen, wie hohen elektrostatischen Druckschwankungen oder Schwerelosigkeit, betrieben werden, ist es problematisch, einen frei beweglichen Elektrolyten zu verwenden. Dies gilt insbesondere für Zellen, in denen eine Gasphase auftritt, wie beispielsweise bei der Wasserelektrolyse oder bei Brennstoffzellen. Eine Vermischung der verschiedenen Gase untereinander, beispielsweise H₂ mit O₂, muß unter allen Bedingungen vermieden und eine kontinuierliche Trennung von Gasphase und Flüssigphase (Elektrolyt) garantiert werden.

Die angesprochenen extremen Bedingungen treten vor allem in der Luftfahrt und Raumfahrt auf und sind verbunden mit der Forderung nach hoher Zuverlässigkeit der Systeme. Für derartige Anwendungen versucht man ein immobiles System zu verwenden, den Elektrolyten in einem porösen Festkörper (Matrix) mittels Kapillarkräften zu fixieren oder aber organische oder anorganische Ionenaustauscher-Membranen zu verwenden.

Die Energieumwandlung in elektrochemischen Zellen hat einen Wirkungsgrad, der in der Regel deutlich unter 100 % liegt. Beispielsweise liegt er in alkalischen H₂/O₂-Brennstoffzellen je nach Stromdichte und Elektrodenkatalysator zwischen 50 und 60 %, bezogen auf den oberen Heizwert von Wasserstoff. Die restlichen 40 bis 50 % der Energie gehen als Wärmeenergie verloren. Diese Wärmeenergie muß aus den Zellen entfernt werden, um konstante Betriebsbedingungen zu gewährleisten und eine thermische Zerstörung der Zellen zu verhindern.

Bei Zellen mit mobilen Elektrolyten kann dies sehr einfach über einen Elektrolytkreislauf mit eingebauten Wärmetauschern erfolgen. Bei Zellen mit immobilen Elektrolyten entfällt diese Möglichkeit.

Über Wärmeleitung der Zellmaterialien können wegen schlechter Wärmeleitfähigkeit der Werkstoffe, und über Gaskreisläufe wegen der geringen Wärmekapazität der Gase nur minimale Mengen an Wärme abgeführt werden. Im Falle der H₂/O₂-Brennstoffzelle wird ein Teil der Wärmemenge durch Verdampfen des produzierten Wassers entfernt. Der größte Teil der Wärmeenergie muß aber über in die Zellen eingebaute Wärmetauscherplatten abgeführt werden. Diese Wärmetauscherplatten und der dazugehörige Kühlkreislauf haben aber eine deutliche Erhöhung des Gewichts und des Volumens der elektrochemischen Zelle zur Folge. Der Betrieb einer Kühlmittelpumpe verringert darüber hinaus die Energieausbeute und auch die Zuverlässigkeit des Systems.

Bekannt sind folgende Beispiele für elektrochemische Zellen, die nach dem oben beschriebenen Prinzip aufgebaut sind:
- alkalische H₂/O₂-Brennstoffzellen mit einem in einer Matrix festgelegten KOH-Elektrolyten (D. Stachewski in Hydrogen Energy Progress, Vol. 4, Pergamon Press 1983, S. 1677-1684),
- SPE-Brennstoffzellen mit einer Ionenaustauscher-Membran als Elektrolyten (K. Kordesch, Brennstoffbatterien, Springer Verlag 1984, S. 177 ff.),
- alkalische Wasserelektrolyseure mit einem in einer Matrix festgelegten KOH-Elektrolyten (F.H.Shubert, Alkaline regenerative fuel cell systems for energy storage, 16 th. Intersoc. Energy conv. Eng. Conf. Atlanta 1981) und
- SPE-Wasserelektrolyseure mit einer Ionenaustauscher-Membran (S. Stucki et al., Journal Elektrochemical Soc. 1985, S. 367 ff.).

In der EP-A-301 757 wird eine Brennstoffzelle vorgeschlagen, die einen immobilen Elektrolyten hat. Zur Kühlung der Zelle ist eine interne Verdampfungskühlung mit Wasser vorgesehen. Dabei wird das Wasser in einen ersten Raum geführt, durch die poröse Anode transportiert, von einer Verteilerschicht verteilt und in einem zweiten Raum verdampft, von wo aus der Dampf abgezogen wird.

Aus der US-A-34 53 147 ist eine Brennstoffzelle zur Verstromung flüssiger Brennstoffe bekannt. Zur Kühlung wird das im flüssigen Elektrolyten enthaltende Wasser teilweise verdampft. Der Dampf wird mit dem abgezogenen Gas entfernt. Vorgeschlagen ist auch die Kühlung durch Verdampfen von Wasser aus dem Elektrolyten durch eine poröse Kathode in einen Luftstrom.

Aus der FR-A 1 343 617, der FR-A 1 402 790 und der FR-A 1 547 850 sind Brennstoffzellen bekannt, bei denen eine Flüssigkeit direkt einer porösen Elektrode zugeführt wird, dort verdunstet und mit Gas abgezogen wird. Zur Kühlung sind weitere Elemente (Wärmetauscherplatten, Verteilerschichten und ähnliches) vorgesehen.

Aus der US-A 3 905 884 ist eine Elektrolysezelle bekannt, bei der zur Kühlung ein eigener Kühlkreislauf mit Wärmetauscher vorgesehen ist.

Aus der US-A 3 957 535 ist eine Brennstoffzelle bekannt, bei der ebenfalls ein eigenes Bauteil (Kühlkammer) zum Abführen der Wärme vorgesehen ist.

Der Erfindung liegt die Aufgabe zugrunde, eine elektrochemische Zellenbatterie mit immobilen Elektrolyten zu entwickeln, die eine wesentlicht leichtere und kompaktere Bauweise aufweist als bekannte Modelle.

Diese Aufgabe wird erfindungsgemäss gelöst durch eine Zellenbatterie mit den Merkmalen des Anspruchs 1. Ein erfindungsgemässes Kühlverfahren ist Gegenstand des Anspruchs 2.

Einer erfindungsgemässen Zelle wird eine Flüssigkeit, beispielsweise aufbereitetes Wasser, von aussen in definierter Menge zugeführt. Die Flüssigkeit wird in der Zelle verdampft. Die Verdampfungsenergie, bei Wasser ca. 2.25 kJ/g, wird der Zelle entzogen. Der entstandene Dampf wird über einen Gasstrom, beispielsweise einen Überschuss an Reaktionsgas, aus der Zelle entfernt und kann, falls notwendig, in einem externen Kühler kondensiert werden.

Für die erfindungsgemäße Zuführung der zu verdampfenden Flüssigkeit in die Zelle stehen zwei Möglichkeiten, die auch den Einsatz unter extremen Bedingungen ermöglichen, zur Verfügung:
1. Die Flüssigkeit wird fein zerstäubt und als Aerosol einem Gasstrom beigemischt und über diesen in die Zelle transportiert.
2. In die Gasräume der immobilen Zelle wird ein poröses Material in Form von Dochten, Filzen, Geweben oder einer Membran eingebaut. Dieses poröse Material saugt über Wasserkanäle im Zellrahmen von außen Wasser auf und verdampft dieses Wasser an seiner Oberfläche im Innern des Gasraumes.

Die erfindungsgemäße elektrochemische Zelle mit Verdampfungskühlung hat eine Reihe entscheidender Vorteile. Der Aufbau der Zelle wird einfacher und kompakter. Dadurch sinkt das Gewicht deutlich. Der Gewichtsvorteil gegenüber einer Zelle mit Kühlplatten liegt in der Größenordnung von 20 %. Es wird kein Kühlkreislauf für die Zelle benötigt. Der Wegfall einer Kühlmittelpumpe erhöht den Gesamtwirkungsgrad des Systems, da für die Pumpe keine Enrgie verbraucht wird. Durch den einfacheren Aufbau und den Wegfall des Kühlkreislaufs wird das System zuverlässiger und wartungsfreundlicher. Die Verdampfungskühlung mit Wasser ist aufgrund der höhen Verdampfungswärme von ca. 2.25 kJ/g sehr viel effektiver als eine Kühlung über Plattenwärmetauscher.

Der bei der Verdampfungskühlung entstehende Wasserdampf kann gleichzeitig für die Regelung des Wasserhaushaltes des elektrochemischen Prozesses eingesetzt werden. Während der Elektrolyse wird Wasser verbraucht, das dem Elektrolyten zugeführt werden muß. Dies kann ideal mit der Verdampfungskühlung kombiniert werden. Je höher die Stromdichte, desto mehr Wasser muß dem Elektrolyten zugeführt werden. Gleichzeitig verschlechtert sich aber der Wirkungsgrad und die Kühlung muß verstärkt werden, also muß mehr Wasser verdampft werden.
Bei der H₂/O₂-Brennstoffzelle entsteht zwar Wasser als Reaktionsprodukt, das beim immobilen System über die Gasphase entfernt werden muß, dennoch kann sehr leicht ein Austrocknen des Elektrolyten (Matrix, Membran) durch die H₂- bzw. O₂-Gasströme auftreten. Durch ein Anfeuchten der Gasströme und/oder der Matrix, wie es bei der Verdampfungskühlung geschieht, wird dieses Austrocknen verhindert.

Der Aufbau und die Funktion der erfindungsgemäßen Zelle wird anhand von Prinzipdarstellungen einer alkalischen, immobilen H₂/O₂-Brennstoffzelle erläutert.

Es zeigen:
- Figur 1: das Prinzip einer Zelle mit Verdampfungskühlung und Flüssigkeitszufuhr über Aerosole,
- Figur 2: das Prinzip einer Zelle mit Verdampfungskühlung und Flüssigkeitszufuhr über poröses Material,

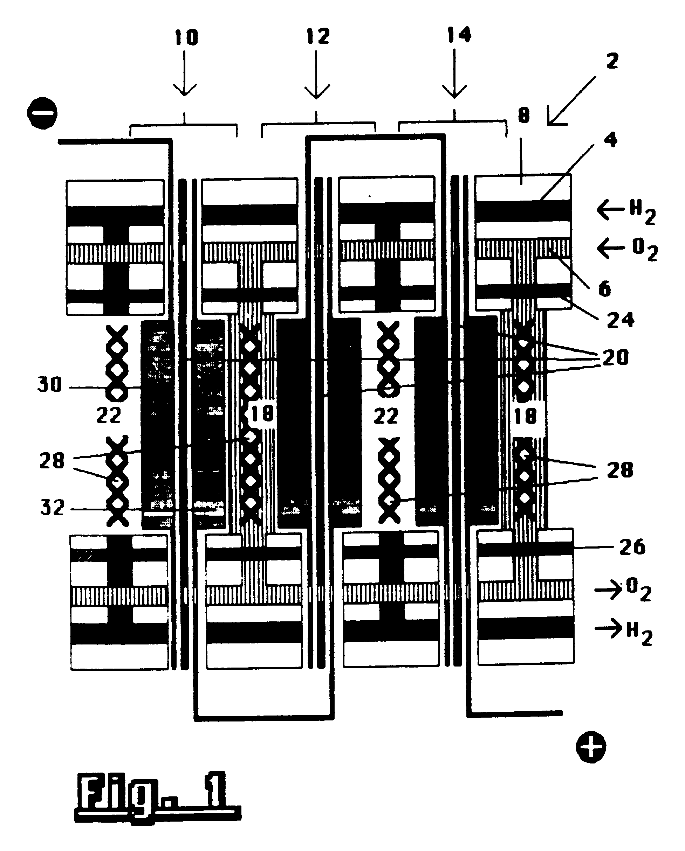

Figur 1 zeigt das Prinzip einer immobilen H₂/O₂-Brennstoffzelle 2, die über Wasseraerosole gekühlt wird. Über Versorgungskanäle 4 und 6 in den Zellrahmen 8 wird den einzelnen Zellen 10, 12 und 14 H₂ und O₂ zugeführt. Dem O₂-Gasstrom werden H₂O-Aerosole beigemischt, die mit einem Aerosol-Generator, hier nicht gezeigt, in definierter Menge hergestellt werden.
Die Aerosole verdampfen in den O₂-Gasräumen 18 und kühlen dadurch die Zelle 2. Ein Teil des entstehenden Wasserdampfes wird über einen Überschuß-O₂-Strom aus der Zelle 2 herausgeführt und der andere Teil dient zum Befeuchten der Matrix 20. Das von der Matrix 20 verdampfte Wasser, Reaktionswasser + Wasser aus der Befeuchtung, wird an die H₂-Gasräume 22 und/oder O₂-Gasräume 18 abgegeben und über die Gasströme aus der Zelle 2 heraustransportiert. Über die Kanäle 24 und 26 wird die Matrix 20 mit Elektrolyt befüllt. In den Gasräumen 18 und 22 befinden sich Abstandshalter 28, die den Abstand zwischen zwei benachbarten Anoden 30 und zwei benachbarten Kathoden 32 gewährleisten.

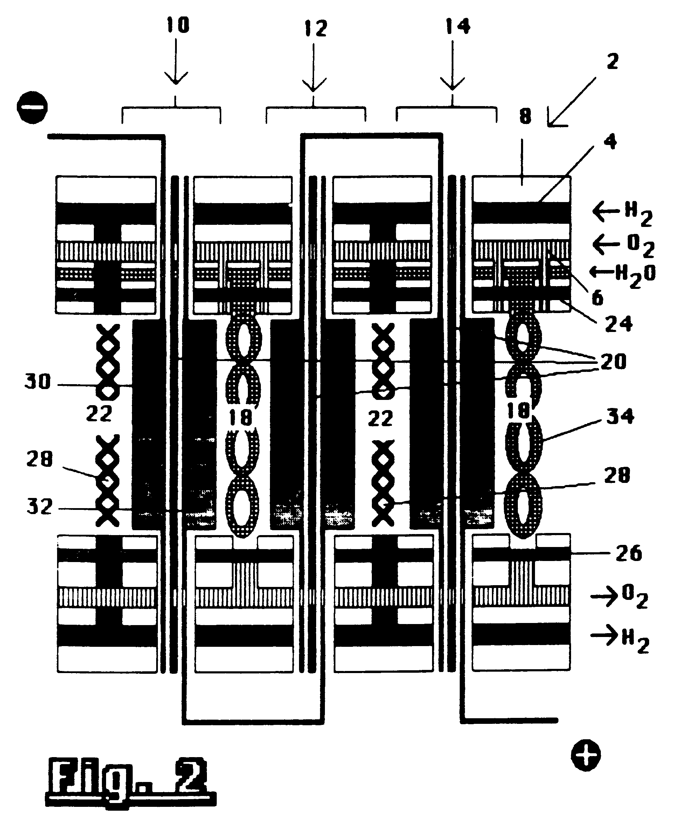

Figur 2 zeigt das Prinzip einer immobilen H₂/O₂-Brennstoffzelle 2 mit Verdampfungskühlung, in der das flüssige Wasser einem porösen Material 34, beispielsweise einem Docht, zugeführt wird, das in die O₂-Gasräume 18 eingebaut ist. Das in der notwendigen Menge zugeführte Wasser verdampft von der Oberfläche des porösen Materials 34 innerhalb des Gasraumes 18. Der entstehende Wasserdampf wird über die Gasströme aus der Zelle herausgeführt und/oder dient zum Befeuchten der Matrix 20.

Bei den in den Figuren gezeigten Brennstoffzellen sind die Einzelzellen elektrisch in Serie geschaltet. Ebenso ist eine parallele oder bipolare Kontaktierung möglich.
Elektrolysezellen mit Verdampfungskühlung sind nach ähnlichem Prinzip aufgebaut.
Anstatt der porösen Matrix kann auch eine organische oder anorganische Ionenaustauscher-Membran verwendet werden.

## Patentansprüche

1. H₂/O₂-Brennstoffzellenbatterie oder Wasserelektrolysezellenbatterie, geeignet für den Betrieb in der Schwerelosigkeit, deren Zellen (2) mit einem immobilen Elektrolyten und angrenzenden Elektroden so angeordnet sind, dass ein Reaktionsgasraum (18) zwischen je einer Elektrode von benachbarten Zellen (2)abgegrenzt wird, wobei Mittel zum Zuführen eines Reaktionsgases und Wasser in diesen Reaktionsgasraum (18) vorgesehen sind wobei durch die Mittel zum Zuführen des Wassers das Wasser fein zerstäubt und als Aerosol einem Gasstrom beigemischt und über diesen in den Reaktionsgasraum (18)transportiert wird oder über Wasserkanäle eines porösen Materials (34) in Form von Dochten, Filzen, Geweben oder einer Membran von aussen in den Reaktionsgasraum gesaugt wird, wobei das Wasser zur alleinigen Kühlung der Brennstoffzellen- oder Wasserelektrolysezellenbatterie in den Reaktionsgasraum (18) verdampft und von dort ohne Zwischenschaltung einer Verteilerschicht abgezogen wird und in der Brennstoffzellenbatterie oder der Wasserelektrolysezellenbatterie keine Wärmetauscherplatten verwendet werden.

2. Verfahren zum Kühlen einer H₂/O₂-Brennstoffzellenbatterie oder Wasserelektrolysezellenbatterie, deren Zellen (2) mit einem immobilen Elektrolyten und angrenzenden Elektroden über Reaktionsgasräume (18) neben den Elektroden verfügen, nach dem die alleinige Kühlung der Zellen durch eine interne Verdampfungskühlung mit Wasser in einem Reaktionsgasraum (18) ohne Verwendung von Wärmeaustauscherplatten erfolgt, wobei das Wasser fein zerstäubt und als Aerosol einem Gasstrom beigemischt und über diesen in den Reaktionsgasraum (18) transportiert wird oder über Wasserkanäle eines porösen Materials (34) in Form von Dochten, Filzen, Geweben einer Membran von aussen in den Reaktionsgasraum (18) gesaugt wird und das Wasser aus dem Reaktionsgasraum (18), in den es eingebracht wird, nach Verdampfung unmittelbar, das heisst ohne Zwischenschaltung einer Verteilerschicht abgezogen wird.

## Claims

1. H₂/O₂ fuel cell battery or water electrolysis cell battery, suitable for operation in zero gravity, of which the cells (2) with an immobile electrolyte and adjacent electrodes are arranged in such a way that a reaction gas space (18) is delimited between one electrode of one cell (2) and one electrode of an adjacent cell (2) in each case, means for supplying a reaction gas and water to this reaction gas space (18) being provided, wherein the water is either finely atomised by the water supply means and is mixed in the form of an aerosol with a gas stream and is transported by the latter into the reaction gas space (18), or is drawn from the exterior into the reaction gas space via water channels in a porous material (34) in the form of wicks, felts, textile fabrics or a membrane, wherein the water is vaporised in the reaction gas space (18) solely for cooling the fuel cell or water electrolysis cell battery and from there is drawn off without the interposition of a distributor layer, no heat exchanger plates being used in the fuel cell battery or water electrolysis cell battery.

2. Process for cooling an H₂/O₂ fuel cell battery or water electrolysis cell battery of which the cells (2), with an immobile electrolyte and adjacent electrodes, comprise reaction gas spaces (18) adjacent the electrodes, in accordance with which process the cells are cooled solely by internal vapour cooling with water in a reaction gas space (18) without the use of heat exchanger plates, wherein the water is either finely atomised and mixed in the form of an aerosol with a gas stream and is transported via the latter into the reaction gas space (18), or is drawn from the exterior into the reaction gas space (18) via water channels in a porous material (34) in the form of wicks, felts, textile fabrics or a membrane, and the water is drawn directly out of the reaction gas space (18) into which it was introduced, after vaporisation, that is without the interposition of a distributor layer.

## Revendications

1. Batterie de cellules électrochimiques H₂/O₂ ou batterie de cellules à électrolyse de l'eau, convenant pour le fonctionnement en apesanteur, dont les cellules (2) avec un électrolyte immobile et des électrodes adjacentes sont disposées de telle façon qu'un volume de gaz de réaction (18) est délimité entre respectivement une électrode de cellules (2) voisines, des moyens étant prévus pour l'amenée d'un gaz de réaction et de l'eau dans ce volume de gaz de réaction (18), l'eau étant finement pulvérisée et ajoutée sous forme d'aérosol à un jet de gaz par lesdits moyens pour l'amenée de l'eau et transportée par l'intermédiaire dudit jet de gaz dans le volume de gaz de réaction (18) ou aspirée depuis l'extérieur dans le volume de gaz de réaction par l'intermédiaire de canaux d'eau d'un matériau poreux (34) sous la forme de mèches, de feutres, de tissus ou d'une membrane, l'eau étant évaporée dans le volume de gaz de réaction (18) pour le seul refroidissement de la batterie de cellules électrochimiques ou de cellules d'électrolyse de l'eau, puis soutirée sans interposition d'une couche de distribution, et aucune plaque d'échangeur de chaleur n'étant utilisée dans la batterie de cellules électro-chimiques ou dans la batterie de cellules d'électrolyse de l'eau.

2. Procédé de refroidissement d'une batterie de cellules électrochimiques H₂/O₂ ou d'une batterie de cellules d'électrolyse de l'eau dont les cellules (2) avec un électrolyte immobile et des électrodes adjacentes disposent de volumes de gaz de réaction (18) à côté des électrodes, selon lequel le seul refroidissement des cellules est assuré par un refroidissement interne par évaporation avec de l'eau dans un volume de gaz de réaction (18), sans utilisation de plaques d'échangeur de chaleur, l'eau étant finement pulvérisée et ajoutée sous forme d'aérosol à un jet de gaz et transportée par l'intermédiaire dudit jet de gaz dans le volume de gaz de réaction (18) ou aspirée depuis l'extérieur dans le volume de gaz de réaction (18) par l'intermédiaire de canaux d'eau d'un matériau poreux (34) sous la forme de mèches, de feutres, de tissus ou d'une membrane, et l'eau étant directement soutirée du volume de gaz de réaction (18) dans lequel elle a été introduite, après l'évaporation, c'est-à-dire sans interposition d'une couche de distribution.
